# EUROPEAN PATENT SPECIFICATION

(11) **EP 2 243 969 B1**
(45) Date of publication and mention of the grant of the patent: **25.07.2018**
(21) Application number: 10155715.5
(22) Date of filing: 08.03.2010
(51) Int. Cl.: F16B 12/44

(54) **Connection group between a leg and a shelf of a piece of furniture**
Vorrichtung zur Verbindung von Bein und Platte eines Möbelstücks
Pièce de fixation d'un pied à un panneau d'un meuble

(30) Priority: 24.04.2009 IT MI20090700
(43) Date of publication of application: 27.10.2010
(73) Proprietor: LEONARDO S.r.l., 22060 Figino Serenza, CO (IT)
(72) Inventor: Cattaneo, Carlo, 22060, Figino Serenza (IT)
(74) Representative: Martegani, Franco

(56) References cited:
- EP-A2- 1 915 923
- DE-U1- 29 621 414
- US-A- 5 163 373

## Description

The present invention relates to a stable and long-lasting connection group between a leg and a shelf (surface) of a piece of furniture, for example the top of a table or desk.

As is well known to experts in the field, the stable fixing of a leg to a shelf has always represented a difficult problem to solve, above all in relation to the various destinations that said shelf can have.

If, in fact, the shelf is destined for a work desk, which means that it will undergo stress on the part of various types of forces - deriving from the movements of an operator and/or functioning of machines and equipment - the requirements that the connection must satisfy are quite different from those where the shelf is, for example, a simple table, or piece of furniture, on which, however, no continuous work activity is exerted.

In the case of work desks, in order to obtain a stable structure, the shelf is generally assembled on a framework fixed to the legs.

A connection system of this known type is described for example in patents EP 1234526 and EP 1234986.

These systems achieve the objective of obtaining a stable connection with time between the surface and legs, also under extremely difficult operative conditions: they are however complex and extremely costly.

In the case of shelves not destined for being subjected to heavy operative stress, for examples furnishing tables, for resting static objects, for meetings, or the like, connecting the shelf to the legs using a joint of the type described and illustrated for example in patents IT 1028018 and EP 0467460, is known.

In short, the joint, object of these patents, comprises a single metal group incorporating an expandable cylinder destined for being inserted inside a tubular leg.

An annular flange with radial arms for fixing the joint to the shelf of the piece of furniture by means of screws, is associated with the cylinder.

After inserting the cylinder inside the leg, the latter is fixed in position by expansion of the same cylinder using a radial screw incorporated in the joint and accessible through a hole situated in the same leg.

Joints of this type are economical and easy to use, but their use is not completely satisfactory in relation to work surfaces, as indicated above.

A different examples of this a known solution is shown in EP 1915923, which shows a connection group provided by a shank and a box shaped ribbed flange with screws to a working surface above.

This solution, although useful, has the problem that for improving the sturdiness of the coupling between the flange and the working surface above it is necessary to reduce the height of the internal ribs, risking to reduce the sturdiness of the flange.

The document US 5163373 discloses a connection group between a leg and a shelf of a piece of furniture which comprises an elongated metal support member adapted to be secured to the upper member and of sufficient length to support the upper member above the floor.
An elongated wooden cover member (72) is mounted on the metal support member, the elongated cover member having a length substantially coextensive with the metal support member for covering the metal support member. In addition, the cover member has at least one elongated retaining groove for slidably receiving the elongated retaining tongue of the metal support member, thereby slidably retaining the cover member on the metal support member. The cover member substantially conceals the metal support member from view from at least one side of the furniture article.

A general objective of the present invention is to overcome the drawbacks of the known art by providing a connection system between a leg and a shelf of a piece of furniture which is at the same time economical, and also capable of ensuring a stable construction with time when the shelf is destined to undergo heavy stress.

This objective is achieved by a connection group having the characteristics specified in the enclosed main claim and subclaims.

The structural and functional characteristics of the invention and its advantages with respect to the known art will appear evident from the following description, referring to the enclosed drawings, which illustrate a practical embodiment of the invention itself.

In the drawings:

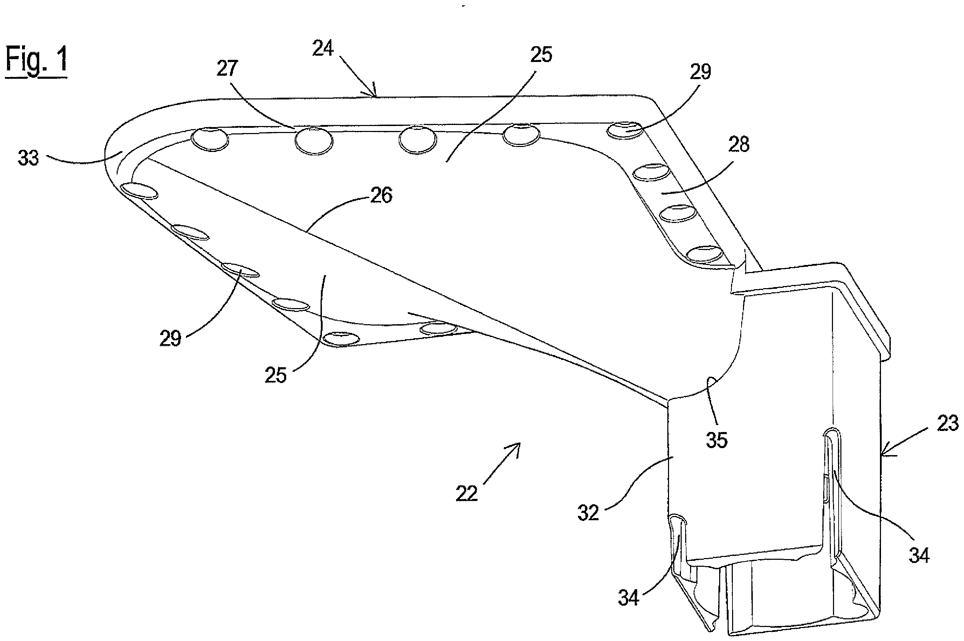

figure 1 is a perspective view from below illustrating the group according to the invention;
figure 2 is a perspective view from above of the same group of figure 1;

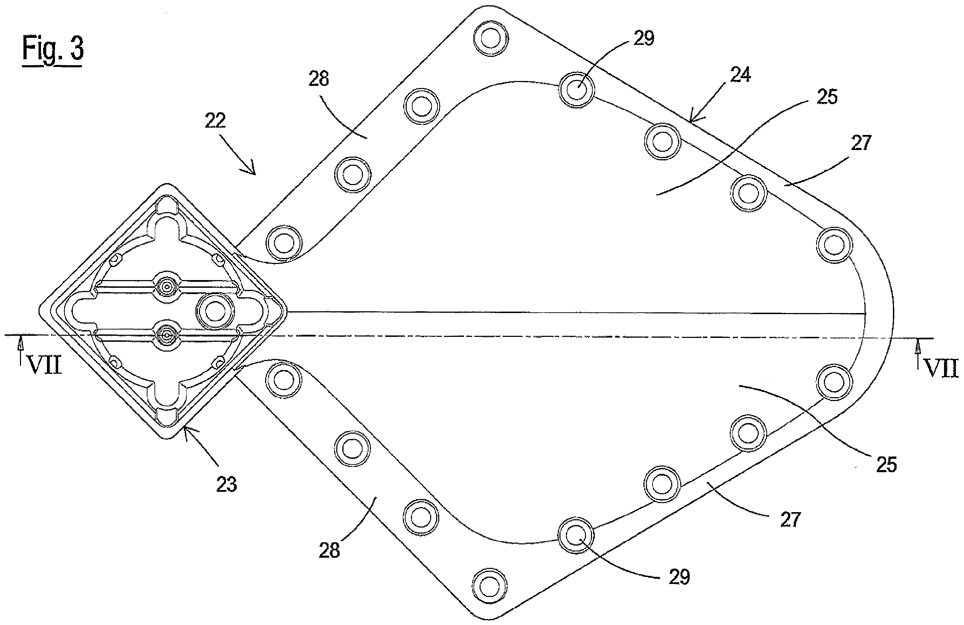

figure 3 is a plan view from below;
figure 4 is a plan view from above;

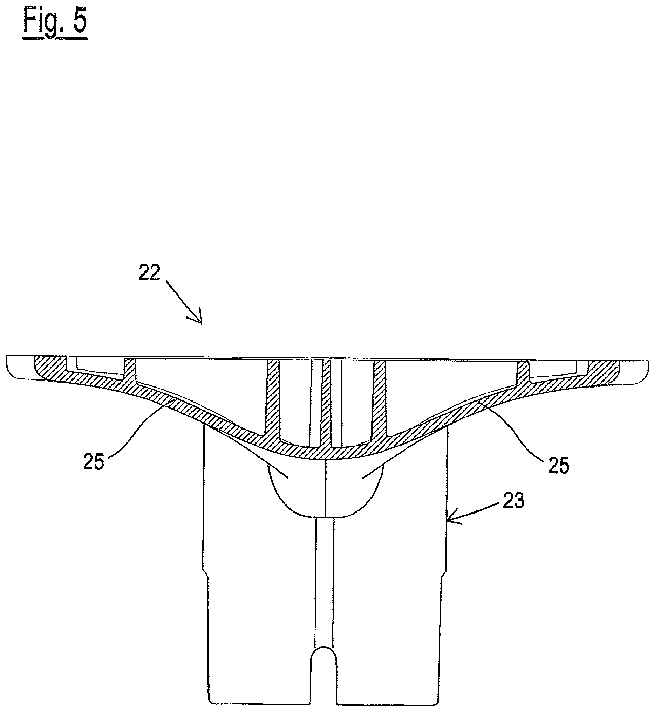

figure 5 is a sectional view taken according to the tracing V-V of figure 4;

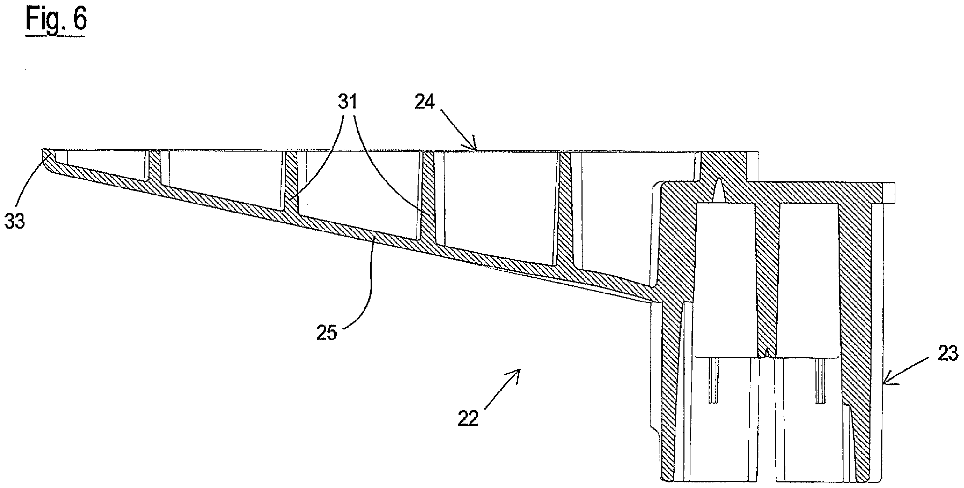

figure 6 is a sectional view taken according to the tracing VI-VI of figure 4;

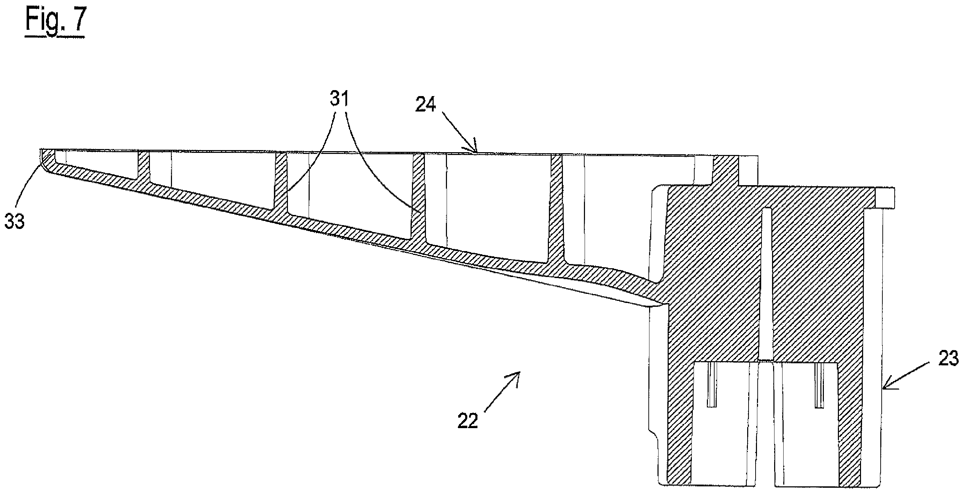

figure 7 is a sectional view taken according to the tracing VII-VII of figure 3;

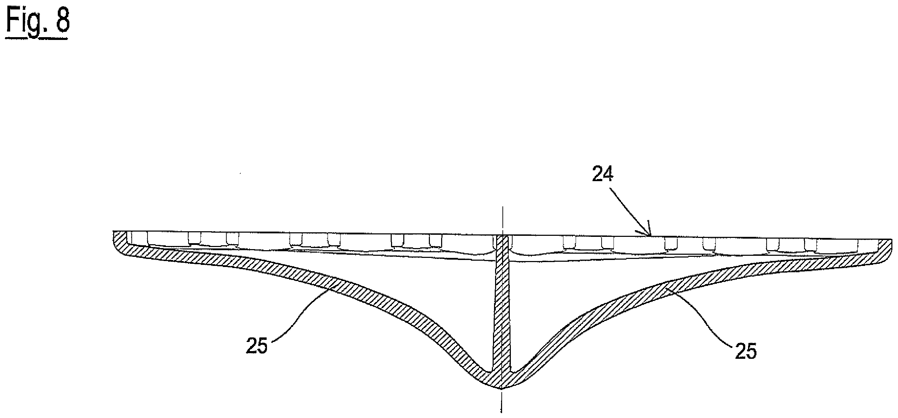

figure 8 is a sectional view taken according to the tracing VIII-VIII of figure 4;

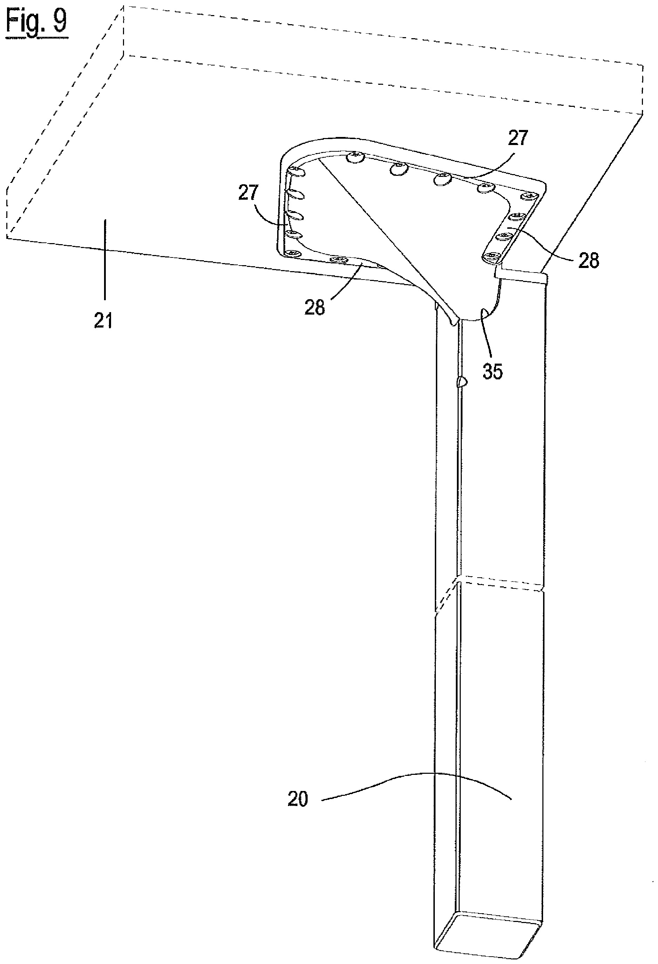

figure 9 is a perspective view from below illustrating the group of figures 1-8 in the operative connection position between a leg and a shelf;

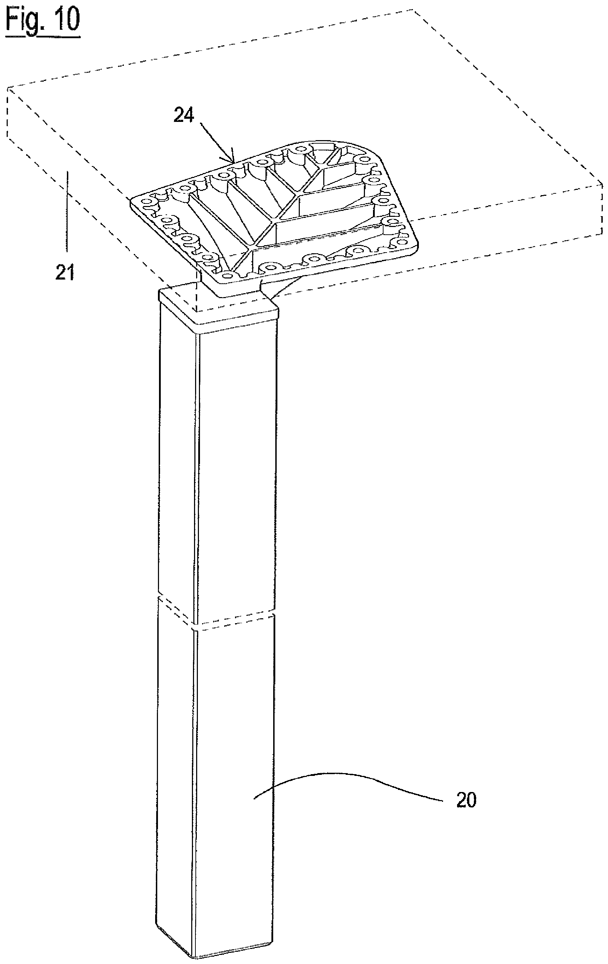

figure 10 is the same view as figure 9, from above;

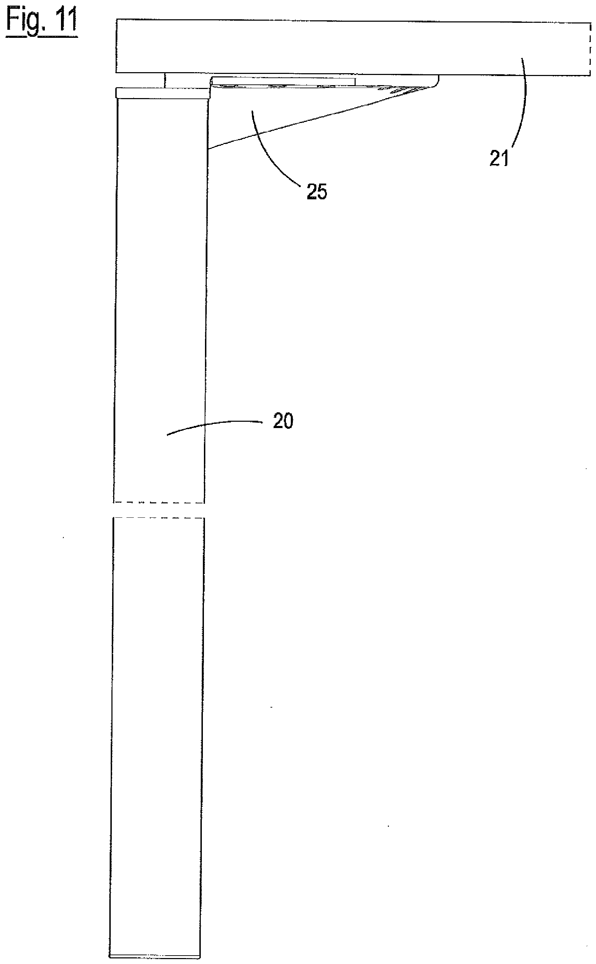

figure 11 is a raised side view such as figures 9 and 10; and

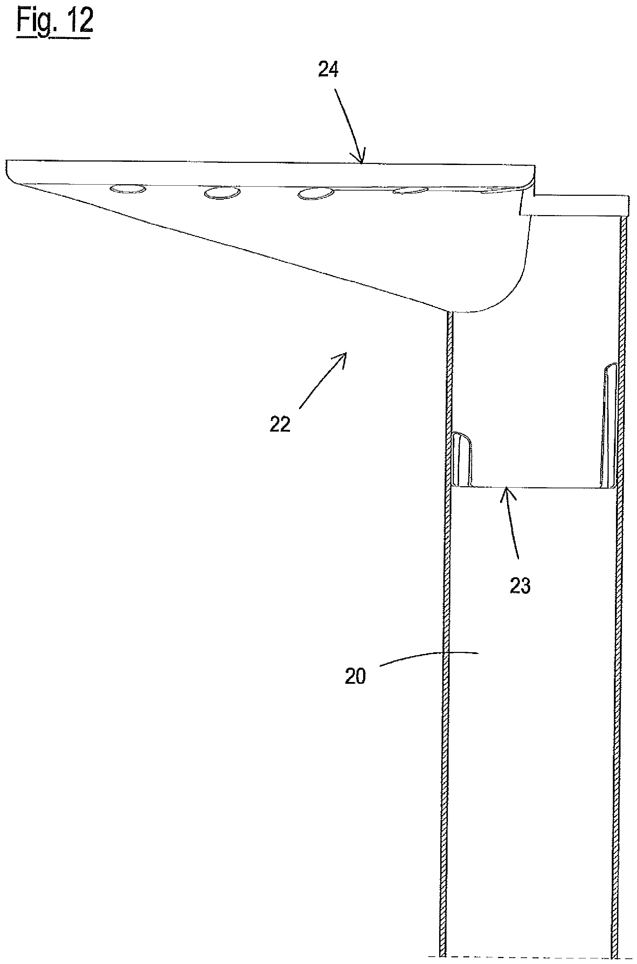

figure 12 is a partially sectional raised view illustrating the detail of the application of the connection group of figures 1-11 to a leg of a shelf.

With reference to the drawings, the connection group between a leg 20 and a shelf 21 of a piece of furniture, produced according to the invention, is indicated as a whole with 22 and is preferably produced in a single metallic piece by melting.

The group 22 is structurally composed of a vertical shank 23 and a horizontal flange 24, which extends radially from said shank 23.

The shank 23 has a plan section corresponding to that of the leg 20 in which it must be inserted and fixed.

In the example illustrated, the shank 23 has a polygonal section, for example square, and the flange 24 extends radially from an edge of the shank 23 itself, to which it is connected along the line 35.

The flange 24 has a characteristic box-shaped shell configuration, similar to the shape of a ferrule.

More specifically, the flange 24 is structurally composed of two tilted outer walls 25 which connect a crest or summit line 26 to flat side edges 27, 28 provided with holes 29 for the passage of fixing screws of the flange 24 to the shelf 21.

As can be clearly seen from the drawings, the box-shaped flange 24, for tightening purposes, is internally ribbed, containing a central axial ribbing 30 from which side ribs 31 extend, which connect the central ribbing 30 to the holes 29 of the sides 27.

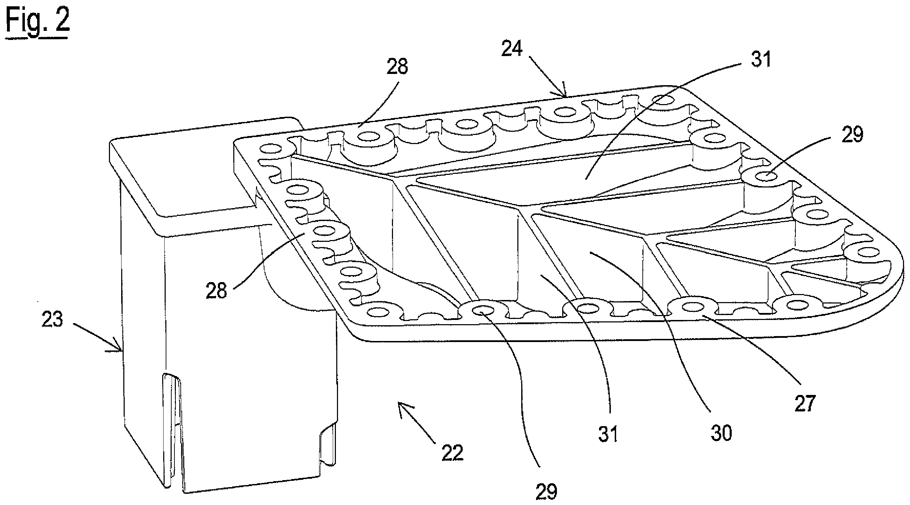

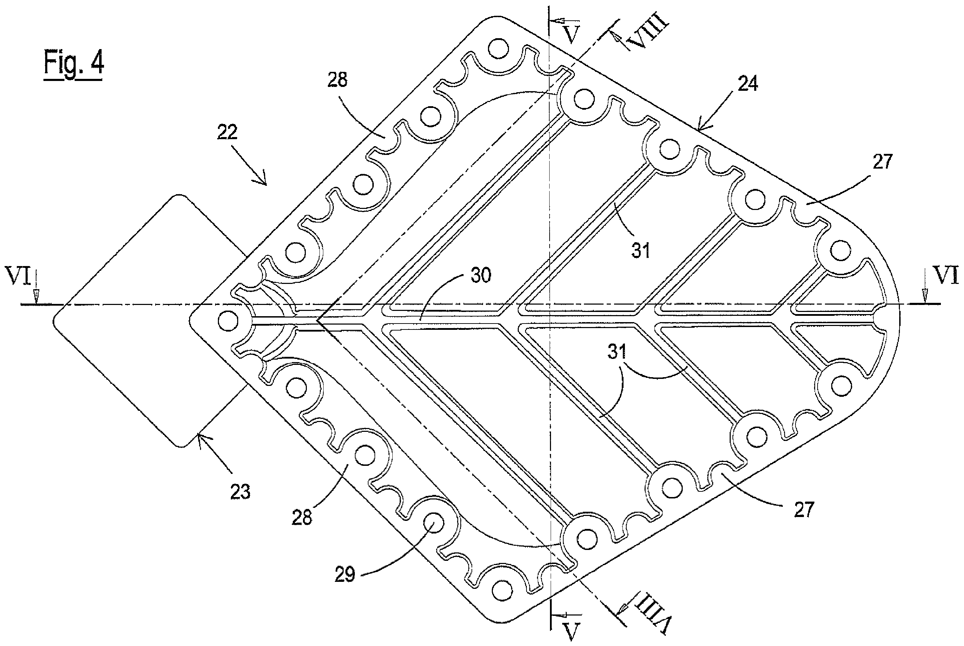

The combination of the ribs 30, 31 with the sides 27, 28 is also similar to the pattern of a leaf (figures 2, 4).

The central ribbing 30 extends radially from a connected edge 32 of the shank 23 and has a decreasing height from said edge 32 to an end or tip 33.

The side ribs 31 have a decreasing height from the summit line or crest 26 - caused by the central ribbing 30 - to the flat edges 27, 28.

The characteristic box-shaped ribbed shell configuration of the flange 24 derives from what is described above.

The edges 28 extend perpendicularly from the sides of the shank 23 (i.e. parallel to the sides of the shelf 21), whereas the edges 27 converge from the edges 28 to the tip 33, as can be seen in the drawings.

The shank 23 has less resistant fissures 34 on the edges, to allow it to be inserted with slight interference inside the leg 21, where the same shank 23 can be possibly fixed in place using suitable means. For this purpose, glues for metals can be used, or mechanical means, such as those illustrated in patent EP 1279353.

Practical tests have widely demonstrated that the use of a connection group according to the invention allows an extremely stable connection between a leg and a shelf to be obtained, also in cases in which the whole structure is subjected to continuous heavy work stress.

The objective specified in the preamble of the description has therefore been achieved.

The protection scope of the present invention is defined by the enclosed claims.

## Claims

1. A connection group between a leg (20) and a shelf (21) of a piece of furniture, comprising a vertical shank (23) which can be fixed to said leg (20), and a flange (24) radially protruding from said shank (23), said shelf (21) being fixable to said flange wherein said flange (24) has a box-shaped shell configuration, **characterized in that** said flange (24) is structurally made up of two tilted outer walls (25) connecting a crest or summit line (26) to flat side edges (27, 28) having holes (29) for the passage of screws for fixing the flange (24) to the shelf (21) and that said flange (24) is internally ribbed, having a central axial rib (30) from which side ribs extend (31) connecting the central rib (30) to the holes (29) of the sides (27).

2. The group according to claim 1, **characterized in that** said combination of ribs (30, 31) with the sides (27, 28) generally reproduces the shape of a leaf.

3. The group according to claim 1, **characterized in that** said central rib (30) extends radially from a joint edge (32) of said shank (23) and has a decreasing height from said edge (32) to an end or tip (33)

4. The group according to claim 1 and 2, **characterized in that** said side ribs (31) have a decreasing height from the hip line or ridge (26) to said flat edges (27, 28) .

5. The group according to claim 1 and 3, **characterized in that** said edges (28) extend perpendicularly from the sides of said shank (23), parallel to sides of the shelf (21), whereas said edges (27) converge from the edges (28) to said tip (33).

6. The group according to claim 1, **characterized in that** said shank (23) has a section in a polygonal plan, which is square, for example.

7. The group according to claim 1, **characterized in that** said shank (23) has clefts (34) on the edges with a lesser resistance, so as to be inserted with slight interference inside said leg (21).

## Patentansprüche

1. Verbindungsgruppe zwischen einem Bein (20) und einem Regal (21) eines Möbelstücks, mit einem vertikalen Schaft (23), der an dem Bein (20) befestigt sein kann, sowie einem Flansch (24), der radial von dem Schaft (23) vorragt, wobei das Regal (21) an dem Flansch befestigbar ist, wobei der Flansch (24) eine kastenförmige Schalenkonfiguration aufweist, **dadurch gekennzeichnet, dass** der Flansch (24) strukturell aus zwei gekippten Außenwänden (25) besteht, die eine Scheitel- oder Gipfellinie (26) mit flachen Seitenrändern (27, 28) verbinden, die Löcher (29) für den Durchgang von Schrauben zur Befestigung des Flansches (24) an dem Regal (21) aufweisen, und dass der Flansch (24) innen gerippt ist, wobei er eine zentrale axiale Rippe (30) aufweist, von der sich Seitenrippen (31) erstrecken, die die Zentralrippe (30) mit den Löchern (29) der Seiten (20) verbinden.

2. Gruppe nach Anspruch 1, **dadurch gekennzeichnet, dass** die Kombination aus Rippen (30, 31) mit den Seiten (27, 28) allgemein die Form eines Blatts wiedergibt.

3. Gruppe nach Anspruch 1, **dadurch gekennzeichnet, dass** sich die zentrale Rippe (30) radial von einem Fügerand (32) des Schaftes (23) erstreckt und von dem Rand (32) zu einem Ende oder der Spitze (33) eine abnehmende Höhe aufweist.

4. Gruppe nach einem der Ansprüche 1 oder 2, **dadurch gekennzeichnet, dass** die Seitenrippen (31) von der Gratlinie oder dem First (26) zu den flachen Rändern (27, 28) eine abnehmende Höhe aufweisen.

5. Gruppe nach einem der Ansprüche 1 oder 3, **dadurch gekennzeichnet, dass** sich die Ränder (28) rechtwinklig von den Seiten des Schaftes (23) parallel zu Seiten des Regals (21) erstrecken, während die Ränder (27) von den Rändern (28) zu der Spitze (33) konvergieren.

6. Gruppe nach Anspruch 1, **dadurch gekennzeichnet, dass** der Schaft (23) einen Schnitt in einer polygonalen Ebene aufweist, der beispielsweise quadratisch ist.

7. Gruppe nach Anspruch 1, **dadurch gekennzeichnet, dass** der Schaft (23) Spalten (34) an den Rändern mit geringerem Widerstand aufweist, um so mit geringfügiger Überlagerung in das Bein (21) eingesetzt werden zu können.

## Revendications

1. Ensemble de raccordement entre un pied (20) et une étagère (21) d'un élément de meuble, comprenant une tige verticale (23), qui peut être fixée sur ledit pied (20) et une flasque (24), faisant saillie radialement depuis ladite tige (23), ladite étagère (21) pouvant être fixée sur ladite flasque, dans lequel ladite flasque (24) a une configuration en coquille parallélépipédique,
**caractérisé en ce que**
ladite flasque (24) est structurellement composée de deux parois extérieures inclinées (25), raccordant une arête ou ligne de sommet (26) aux bords à côtés plats (27, 28), ayant des trous (29) pour le passage de vis, destinées à fixer la flasque (24) à l'étagère (21)
et **en ce que**
ladite flasque (24) est nervurée intérieurement, ayant une nervure axiale centrale (30), depuis laquelle s'étendent des nervures latérales (31), raccordant la nervure centrale (30) aux trous (29) des côtés (27).

2. Ensemble selon la revendication 1,
**caractérisé en ce que**
ladite combinaison de nervures (30, 31) avec les côtés (27, 28) reproduit généralement la forme d'une feuille.

3. Ensemble selon la revendication 1,
**caractérisé en ce que**
ladite nervure centrale (30) s'étend radialement depuis un bord de joint (32) de ladite tige (23) et a une hauteur décroissante depuis ledit bord (32) vers une extrémité ou un bout (33).

4. Ensemble selon la revendication 1 et 2,
**caractérisé en ce que**
lesdites nervures latérales (31) ont une hauteur décroissante depuis la ligne de rebord ou crête (26) vers lesdits bords plats (27, 28).

5. Ensemble selon la revendication 1 et 3,
**caractérisé en ce que**
lesdits bords (28) s'étendent perpendiculairement depuis les côtés de ladite tige (23), parallèlement aux côté de l'étagère (21), alors que lesdits bords (27) convergent depuis les bords (28) vers ledit bout (33).

6. Ensemble selon la revendication 1,
**caractérisé en ce que**
ladite tige (23) a une section dans un plan polygonal, qui est carrée, par exemple.

7. Ensemble selon la revendication 1,
**caractérisé en ce que**
ladite tige (23) a des fentes (34) sur les bords, avec une moindre résistance, de façon à être insérées avec une légère interférence à l'intérieur dudit pied (21).
